# EUROPÄISCHE PATENTSCHRIFT

(11) **EP 1 427 615 B1**
(45) Veröffentlichungstag und Bekanntmachung des Hinweises auf die Patenterteilung: **16.01.2008**
(21) Anmeldenummer: 02750783.9
(22) Anmeldetag: 08.06.2002
(51) Int. Cl.: B60S 1/08

(54) **WISCHANLAGE FÜR FAHRZEUGE, INSBESONDERE FÜR AUTOMOBIL-WINDSCHUTZSCHEIBEN**
WIPER ARRANGEMENT FOR MOTOR VEHICLES, ESPECIALLY FOR CAR WINDSCREENS
ENSEMBLE ESSUIE-GLACE POUR DES VEHICULES A MOTEUR, EN PARTICULIER POUR DES PARE-BRISE D'AUTOMOBILES

(30) Priorität: 13.09.2001 DE 10145103
(43) Veröffentlichungstag der Anmeldung: 16.06.2004
(73) Patentinhaber: ROBERT BOSCH GMBH, 70442 Stuttgart (DE)
(72) Erfinder: BOLZ, Martin-Peter, 77815 Buehl (DE); KRUEGER, Hartmut, 77830 Buehlertal (DE)
(74) Vertreter: Steinmetz, Martin
(86) Internationale Anmeldenummer: PCT/DE2002/002098
(87) Internationale Veröffentlichungsnummer: WO 2003/026935

(56) Entgegenhaltungen:
- WO-A-02/076796
- US-A- 4 585 980
- US-A- 5 331 257
- US-A- 6 107 766

## Beschreibung

Die Erfindung betrifft eine Wischanlage für Fahrzeuge, insbesondere für Automobil-Windschutzscheiben.

Bei Zwei-Antriebsmotoren-Wischanlagen wird jeder Wischerarm von einem eigenen Antriebsmotor angetrieben. Zur Durchführung des gewünschten Wischvorgangs auf der Windschutzscheibe müssen die Wischerarme das zu wischende Wischfeld mit einem genau festgelegten Geschwindigkeitsprofil überstreichen. Dieses Geschwindigkeitsprofil ist z. B. über einen elektronisch gesteuerten Antriebsmotor durch die Vorgabe von Sollgrößen erreichbar. Alternativ kann dieses Geschwindigkeitsprofil auch ein nichtreversierender, also ein umlaufender Antriebsmotor mit einer geeigneten Wischerarmverbindung etwa über ein Gestänge erzielen. Um unabhängig von tatsächlich auf die Wischerarme wirkenden, äußeren Belastungen stets einen genau definierten Zusammenhang zwischen den Wischbewegungen bzw. den Wischerarmpositionen der beiden Wischerarme zu erreichen, ist eine Kopplung der beiden Antriebsmotoren erforderlich. Hierzu fährt der durch einen Haupt-Antriebsmotor bewegte Wischerarm seine Wischbahn gemäß eines geplanten Soll-Wischbahnverlaufs ab. Die Ist-Stellung des Haupt-Antriebsmotors wird dabei sensiert und an einen Neben-Antriebsmotor übermittelt, der den zweiten Wischerarm antreibt. Die Information der Stellung des Haupt-Antriebsmotors wird in der Regel in einem Mikrocontroller verarbeitet und bei einer Berechnung der Soll-Stellung des Neben-Antriebsmotors berücksichtigt. Der Neben-Antriebsmotor wird somit in Abhängigkeit der Stellung des Haupt-Antriebsmotors gesteuert. Nachteilig bei dieser bekannten Wischanlage ist die notwendige genaue Berechnung der Stellung des Neben-Antriebsmotors in Abhängigkeit der Stellung des Haupt-Antriebsmotors. Diese Berechnung erfordert einen Mikrocontroller, der einer besonders kostengünstigen Realisierung einer Wischanlage entgegensteht.

In der US 4,585,980 ist eine Wischanlage mit zwei Wischerarmen offenbart, die durch Antriebsmotoren betätigbar sind. Der eine Wischerarm wird in Abhängigkeit der Differenz der Winkelstellungen der beiden Wischerarme gesteuert. Eine Kollision zwischen den beiden Wischerarmen wird durch gezieltes Einschalten bzw. Ausschalten der Antriebsmotoren verhindert. Dafür ist jedem Antriebsmotor eine Schaltscheibe mit einer leitenden Kontaktbahn zugeordnet.

Eine weitere Wischanlage ist aus der nachveröffentlichten WO 02/076796 A1 bekannt. Die Wischanlage umfasst zwei Wischerarme, die jeweils mit einem Antriebsmotor in Verbindung stehen. Der eine Antriebsmotor wird dabei in Abhängigkeit der Drehlage und der Drehgeschwindigkeit der Abtriebswelle des anderen Antriebsmotors geregelt.

Der Erfindung liegt die Aufgabe zugrunde, eine Wischanlage der gattungsgemäßen Art derart auszugestalten, daß die Stellung des Neben-Antriebsmotors in Abhängigkeit des Haupt-Antriebsmotors besonders funktionssicher gesteuert wird und keine kostenaufwendige Antriebsmotor-Steuerung erforderlich ist.

Diese Aufgabe wird durch die im Anspruch 1 und 8 angegebenen Merkmale gelöst.

Der Kern der Erfindung ist darin zu sehen, daß ein mit dem Haupt-Antriebsmotor gekoppeltes Motorpositions-Kodierelement vorgesehen ist, das direkt für die zugeordnete Position des Neben-Antriebsmotors repräsentative Steuerkodierungen aufweist. Durch diese Ausgestaltung wird eine besonders kostengünstige Wischanlage realisiert, da eine Berechnung der Stellung des Neben-Antriebsmotors in Abhängigkeit des Haupt-Antriebsmotors nicht erfolgt, um einen genau definierten Zusammenhang zwischen den beiden jeweiligen Wischerarmpositionen zu bewirken. Vielmehr wird der Neben-Antriebsmotor unmittelbar mit Steuerbefehlen versorgt, die aufgrund der körperlichen Kopplung zwischen Kodierelement und Haupt-Antriebsmotor die notwendige exakte Zuordnung zur Stellung des Hauptmotors haben. Auf eine alternative Speicherung der jeweiligen Stellung des Neben-Antriebsmotors in Abhängigkeit des Haupt-Antriebsmotors wird ebenfalls verzichtet. Ein Mikrocontroller ist in dieser erfindungsgemäßen Wischanlage folglich nicht notwendig.

Weitere vorteilhafte Ausgestaltungen geben die Unteransprüche an.

Nachfolgend wird die Erfindung anhand eines bevorzugten Ausführungsbeispiels in Verbindung mit der Zeichnung näher beschrieben. Dabei zeigen:
- Fig. 1: eine schematische Vorderansicht einer Zwei-Antriebsmotoren-Wischanlage und
- Fig. 2: eine schematische Darstellung einer erfindungsgemäßen Kopplung der beiden Antriebsmotoren dieser Wischanlage.

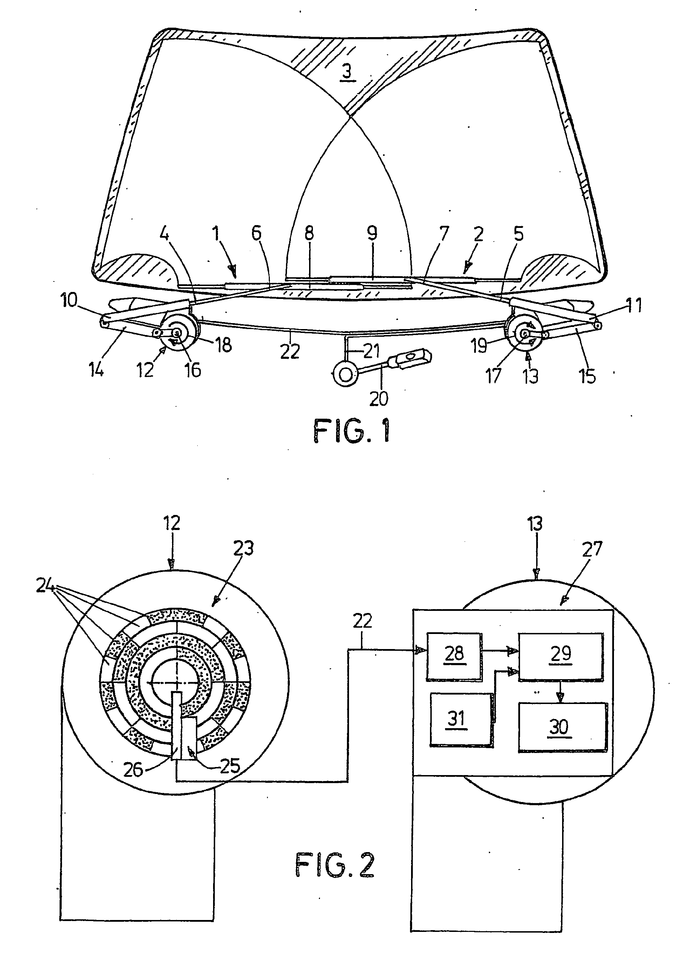

Eine in Fig. 1 dargestellte Zwei-Antriebsmotoren-Wischanlage umfaßt zwei Wischerarme 1, 2, die zum Wischen einer Automobil-Windschutzscheibe 3 vorgesehen sind. Jeder Wischerarm 1, 2 weist eine Wischstange 4, 5 auf, die an ihrem freien Ende 6, 7 ein Wischblatt 8, 9 trägt und mit ihrem anderen Ende 10, 11 an einem mit einem Antriebsmotor 12, 13 verbundenen Befestigungsarm 14, 15 angelenkt ist. Die Wischstange 5 kann gegebenenfalls auch direkt an der Abtriebswelle der Antriebsmotoreinheit 13 angebracht sein. Die Befestigungsarme 14, 15 sind mit einer Abtriebswelle 16, 17 der Antriebsmotoren 12, 13 gelenkig verbunden. Der links in Fig. 1 dargestellte Antriebsmotor 12 ist der Haupt-Antriebsmotor der Wischanlage und ist als Umlauf-Motor, wie auch Pfeil 18 verdeutlicht, ausgebildet. Der in der rechten Hälfte von Fig. 1 dargestellte Antriebsmotor 13 wird im folgenden als Neben-Antriebsmotor bezeichnet und wird, dem Pfeil 19 entsprechend, reversierend angetrieben.

Zum Betätigen der Antriebsmotoren 12, 13 und somit auch der Wischerarme 1, 2 ist ein Betätigungshebel 20 im Inneren des Fahrzeuges vorgesehen, der dem Neben-Antriebsmotor 13 über eine Verbindungsleitung 21 zugeordnet ist. Die beiden Antriebsmotoren 12, 13 sind über eine Signalverbindung 22 miteinander verbunden.

Wie aus Fig. 2 ersichtlich, ist mit dem in der linken Hälfte von Fig. 2 schematisch dargestellten Haupt-Antriebsmotor 12 eine optische Motorpositions-Kodierscheibe 23 gekoppelt. Diese ist an der Abtriebswelle 16 des Haupt-Antriebsmotors 12 angebracht und umfaßt direkt für die zugeordnete Position des Neben-Antriebsmotors 13 repräsentative, binäre Steuerkodierungen 24 in Form von auf konzentrischen Ringbahnen angeordneten Teilkreis-Streifen. Dies bedeutet, daß zu jeder Stellung des Haupt-Antriebsmotors 12 eine korrespondierende Soll-Stellung des Neben-Antriebsmotors 13 hinterlegt ist, d. h. die Motorpositions-Kodierscheibe 23 beinhaltet Steuercodes für die Soll-Wischbewegung des dem Neben-Antriebsmotor 13 zugeordneten Wischerarms 2.

Zum Abtasten der auf der Motoipositions-Kodierscheibe 23 enthaltenen Steuerkodierungen 24 ist eine übliche optische Abtasteinheit 25 mit Abtastdioden 26 vorgesehen. Durch die Motorpositions-Kodierscheibe 23 und die Abtasteinheit 25 wird ein digitales Sollwert-Signal für die Stellung des Neben-Antriebsmotors 13 generiert. Dieses digitale Sollwert-Signal wird über die Signalverbindung 22 zu einer dem Neben-Antriebsmotor 13 zugeordneten Steuerung 27 übermittelt. Die Steuerung 27 umfaßt an ihrem Eingang einen Digital-Analog-Wandler 28. Dem Digital-Analog-Wandler 28 ist ein Analogregler 29 nachgeordnet, dessen Ausgang mit dem Eingang einer Gleichrichter-Brücke 30 verbunden ist. An den Analogregler 29 werden auch Winkelsignale der Stellung des Neben-Antriebsmotors 13 übermittelt. Diese Winkelsignale werden von einer der Abtriebswelle 17 des Neben-Antriebsmotors 13 zugeordneten Meßeinheit 31 sensiert. Der Digital-Analog-Wandler 28 und der Analogregler 29 dienen zur Verarbeitung des digitalen Sollwert-Signals und zur spannungsgesteuerten Regelung der Stellung des Neben-Antriebsmotors 13 in Abhängigkeit der Stellung des Haupt-Antriebsmotors 12. Gegebenenfalls kann der entsprechenden Steuerspannung für den Neben-Antriebsmotor eine Spannungs-Vorsteuerung überlagert werden, deren Wert aus einer entsprechenden Kodierung auf der Kodierscheibe 23 generiert wird. Die Regelung des Neben-Antriebsmotors 13 erfordert weder einen Speicherbaustein, in dem die Sollstellung des Neben-Antriebsmotors 13 hinterlegt ist, noch muß die Stellung des Neben-Antriebsmotors 13 eigenes aus Daten über die Stellung des Hauptmotors berechnet werden.

Die Beziehung der beiden Antriebsmotoren 12, 13 zueinander entspricht der allgemein bekannten Master-Slave Beziehung.

Alternativ zu der beschriebenen Ausführungsform mit der optischen Motorposition-Kodierscheibe 23 ist auch eine Ausführungsform mit einer magnetischen Motorpositions-Kodierscheibe denkbar. In einer besonders kostengünstigen Ausführungsform der Steuerung 27 sind lediglich analoge Bauelemente vorgesehen.

## Patentansprüche

1. Wischanlage für Fahrzeuge, insbesondere für Automobil-Windschutzscheiben, umfassend
- einen ersten Wischerarm (1),
- einen diesem zugeordneten Haupt-Antriebsmotor (12) zur Erzeugung einer definierten Wischbewegung des ersten Wischerarms (1),
- mindestens einen zweiten Wischerarm (2),
- einen diesem zugeordneten Neben-Antriebsmotor (13) zur Erzeugung einer definierten Wischbewegung des zweiten Wischerarms (2), wobei der Neben-Antriebsmotor (13) in Abhängigkeit der Stellung des Haupt-Antriebsmotors (12) gesteuert ist, **gekennzeichnet durch**
- ein mit dem Haupt-Antriebsmotor (12) gekoppeltes Motorpositions-Kodierelement (23), das mit direkt für die zugeordnete Position des Neben-Antriebsmotors (13) repräsentativen Steuerkodierungen (24) versehen ist, wobei der Neben-Antriebsmotor (13) mit einer Spannungs-Vorsteuerung versehen ist, deren Wert **durch** eine zusätzliche Kodierung auf dem Kodierelement (23) generierbar ist,
- eine Abtasteinheit (25) für die Steuerkodierungen (24) des Motorpositions-Kodierelements (23), und
- eine Signalverbindung (22) zwischen der Abtasteinheit (25) und einer Steuerung (27) des Neben-Antriebsmotors (13).

2. Wischanlage nach Anspruch 1, **dadurch gekennzeichnet, dass** der Haupt-Antriebsmotor (12) als Umlauf-Motor ausgebildet ist.

3. Wischanlage nach Anspruch 1, **dadurch gekennzeichnet, dass** der Neben-Antriebsmotor (13) als Reversier-Motor ausgebildet ist.

4. Wischanlage nach einem der Ansprüche 1 bis 3, **dadurch gekennzeichnet, dass** das Motorpositions-Kodierelement (23) als Kodierscheibe ausgebildet ist.

5. Wischanlage nach Anspruch 4, **dadurch gekennzeichnet, dass** die Kodierscheibe (23) als optische Kodierscheibe ausgebildet ist.

6. Wischanlage nach Anspruch 5, **dadurch gekennzeichnet, dass** die Abtasteinheit (25) Abtastdioden (26) umfasst.

7. Wischanlage nach Anspruch 4, **dadurch gekennzeichnet, dass** die Kodierscheibe (23) als magnetische Kodierscheibe ausgebildet ist.

8. Wischanlage für Fahrzeuge, insbesondere für Automobil-Windschutzscheiben, umfassend
- einen ersten Wischerarm (1),
- einen diesem zugeordneten Haupt-Antriebsmotor (12) zur Erzeugung einer definierten Wischbewegung des ersten Wischerarms (1),
- mindestens einen zweiten Wischerarm (2),
- einen diesem zugeordneten Neben-Antriebsmotor (13) zur Erzeugung einer definierten Wischbewegung des zweiten Wischerarms (2), wobei der Neben-Antriebsmotor (13) in Abhängigkeit der Stellung des Haupt-Antriebsmotors (12) gesteuert ist, **gekennzeichnet durch**
- ein mit dem Haupt-Antriebsmotor (12) gekoppeltes Motorpositions-Kodierelement (23), das mit direkt für die zugeordnete Position des Neben-Antriebsmotors (13) repräsentativen Steuerkodierungen (24) versehen ist,
- eine Abtasteinheit (25) für die Steuerkodierungen (24) des Motorpositions-Kodierelements (23), wobei mittels des Kodierelements (23) und der Abtasteinheit (25) ein digitales Sollwert-Signal für den Neben-Antriebsmotor (13) generierbar ist, der einen Digital-Analog-Wandler (28) und einen Analogregler (29) zur Verarbeitung des digitalen Sollwert-Signals und zu seiner Regelung aufweist, und
- eine Signalverbindung (22) zwischen der Abtasteinheit (25) und einer Steuerung (27) des Neben-Antriebsmotors (13).

## Claims

1. Wiper arrangement for motor vehicles, in particular for car windscreens, comprising
- a first wiper arm (1),
- a main drive motor (12) which is assigned thereto and has the purpose of generating a defined wiping movement of the first wiper arm (1),
- at least a second wiper arm (2),
- a secondary drive motor (13) which is assigned thereto and has the purpose of generating a defined wiping movement of the second wiper arm (2), wherein the secondary drive motor (13) is controlled as a function of the position of the main drive motor (12), **characterized by**
- a motor position coding element (23) which is coupled to the main drive motor (12) and is provided with control codes (24) which are directly representative of the assigned position of the secondary drive motor (13), wherein the secondary drive motor (13) is provided with a voltage precontroller whose value can be generated by an additional code on the coding element (23),
- a sampling unit (25) for the control codes (24) of the motor position coding element (23), and
- a signal connection (22) between the sampling unit (25) and a controller (27) of the secondary drive motor (13).

2. Wiper arrangement according to Claim 1, **characterized in that** the main drive motor (12) is embodied as a circulation motor.

3. Wiper arrangement according to Claim 1, **characterized in that** the secondary drive motor (13) is embodied as a reversing motor.

4. Wiper arrangement according to one of Claims 1 to 3, **characterized in that** the motor position coding element (23) is embodied as a coding disc.

5. Wiper arrangement according to Claim 4, **characterized in that** the coding disk (23) is embodied as an optical coding disc.

6. Wiper arrangement according to Claim 5, **characterized in that** the sampling unit (25) comprises sampling diodes (26).

7. Wiper arrangement according to Claim 4, **characterized in that** the coding disc (23) is embodied as a magnetic coding disc.

8. Wiper arrangement for motor vehicles, in particular for car windscreens, comprising
- a first wiper arm (1)
- a main drive motor (12) which is assigned thereto and has the purpose of generating a defined wiping movement of the first wiper arm(1),
- at least a second wiper arm (2)
- a secondary drive motor (13) which is assigned thereto and has the purpose of generating a defined wiping movement of the second wiper arm (2), wherein the secondary drive motor (13) is controlled as a function of the position of the main drive motor (12),
**characterized by**
- a motor position coding element (23) which is coupled to the main drive motor (12) and is provided with control codes (24) which are directly representative of the assigned position of the secondary drive motor (13),
- a sampling unit (25) for the control codes (24) of the motor position coding element (23), wherein the coding element (23) and the sampling unit (25) can generate a digital setpoint value signal for the secondary drive motor (13) which has a digital/analogue converter (28) and an analogue controller (29) for processing the digital setpoint value signal and for controlling it,and
- a signal connection (22) between the sampling unit (25) and a controller (27) of the secondary drive motor (13).

## Revendications

1. Installation d'essuie-glace de véhicule, notamment de pare-brise de véhicule automobile comprenant
- un premier bras d'essuie-glace (1),
- un moteur d'entraînement principal (12) associé à celui-ci pour générer un mouvement d'essuyage défini, du premier bras d'essuie-glace (1),
- au moins un second bras d'essuie-glace (2),
- un moteur d'entraînement auxiliaire (13) associé à celui-ci pour générer un mouvement d'essuyage défini du second bras d'essuie-glace (12), le moteur d'entraînement auxiliaire (13) étant commandé en fonction du moteur d'entraînement principal (12),
**caractérisée par**
- un élément de codage de position de moteur (23) couplé au moteur d'entraînement principal (12), cet élément étant muni de codages de commande (24) représentatifs directement de la position associée du moteur d'entraînement auxiliaire (13),
- le moteur d'entraînement auxiliaire (13) étant muni d'une commande pilote, en tension, dont la valeur est générée par un codage supplémentaire sur l'élément de codage (23),
- une unité de détection (25) pour les codages de commande (24) de l'élément de codage de position de moteur (23) et
- une liaison de signal (22) entre l'unité de détection (25) et une commande (27) du moteur d'entraînement auxiliaire (13).

2. Installation d'essuie-glace selon la revendication 1,
**caractérisée en ce que**
le moteur d'entraînement principal (12) est un moteur rotatif.

3. Installation d'essuie-glace selon la revendication 1,
**caractérisée en ce que**
le moteur d'entraînement auxiliaire (13) est un moteur réversible.

4. Installation d'essuie-glace selon l'une des revendications 1 à 3,
**caractérisée en ce que**
l'élément de codage de la position du moteur (23) est un disque de codage.

5. Installation d'essuie-glace selon la revendication 4,
**caractérisée en ce que**
le disque de codage (23) est un disque de codage optique.

6. Installation d'essuie-glace selon la revendication 5,
**caractérisée en ce que**
l'unité de détection (25) comporte des diodes de détection (26).

7. Installation d'essuie-glace selon la revendication 4,
**caractérisée en ce que**
le disque de codage (23) est un disque de codage magnétique.

8. Installation d'essuie-glace de véhicule, notamment de pare-brise de véhicule automobile comprenant
- un premier bras d'essuie-glace (1),
- un moteur d'entraînement principal (12) associé à celui-ci pour générer un mouvement d'essuyage défini du premier bras d'essuie-glace (1),
- au moins un second bras d'essuie-glace (2),
- un moteur d'entraînement auxiliaire (13) associé à celui-ci pour générer un mouvement d'essuyage défini du second bras d'essuie-glace (12), le moteur d'entraînement auxiliaire (13) étant commandé en fonction du moteur d'entraînement principal (12),
**caractérisée par**
- un élément de codage de position de moteur (23) couplé au moteur d'entraînement principal (12), muni de codages de commande (24) représentatifs des positions associées du moteur d'entraînement auxiliaire (13),
- une unité de détection (25) pour les codages de commande (24) de l'élément de codage de position de moteur (23), et à l'aide de l'élément de codage (23) et de l'unité de détection (25) on génère un signal de valeur de consigne numérique pour le moteur d'entraînement auxiliaire (13), qui comporte un convertisseur numérique/analogique (28) et un régulateur analogique (29) pour traiter le signal numérique de valeur de consigne et pour sa régulation et
- une liaison de signal (22) entre l'unité de détection (25) et une commande (27) du moteur d'entraînement auxiliaire (13).
